# FASCICULE DE BREVET EUROPEEN

(11) **EP 0 495 397 B1**
(45) Date de publication et mention de la délivrance du brevet: **06.08.1997**
(21) Numéro de dépôt: 92100281.2
(22) Date de dépôt: 09.01.1992
(51) Int. Cl.: G05B 19/042

(54) **Procédé d'attribution d'adresses dans un réseau domotique**
Verfahren zur Adressenzuordnung in einem Hausnetz
Address allocation method in a domestic network

(30) Priorité: 17.01.1991 FR 9100479
(43) Date de publication de la demande: 22.07.1992
(73) Titulaire: MOULINEX, F-93170 Bagnolet (FR)
(72) Inventeur: Parise, Vital André, F-14440 Douvres La Delivrance (FR); Letorey, Joseph Arthur P. M., F-14390 Varaville (FR); Leveque, Patrick Michel Guy, F-50000 Saint-Lo (FR)
(74) Mandataire: May, Hans Ulrich, Dr.

(56) Documents cités:
- EP-A- 0 320 390
- EP-A- 0 367 692
- EP-A- 0 378 018
- EP-A- 0 434 986
- EP-A- 0 466 151

## Description

L'invention se rapporte à un procédé d'attribution d'adresses dans un réseau de distribution d'énergie électrique d'une habitation et dans lequel on utilise la technique des courants porteurs pour la transmission d'informations entre des émetteurs-récepteurs dits esclaves comportant chacun un microcontrôleur, et une mémoire EEPROM destinée à contenir différentes adresses relatives notamment à l'esclave et à l'habitation, et au moins une régie-maître comportant d'une part, un microcontrôleur de gestion des informations qui est relié à un clavier de programmation et qui contient dans sa mémoire des programmes utilisateurs et différentes adresses relatives notamment aux esclaves et à l'habitation et, d'autre part, un moyen d'affichage V permettant la visualisation notamment du numéro de l'esclave.

Les procédés d'attribution d'adresses connus sont compliqués, ne sont pas toujours fiables et ne permettent pas à l'utilisateur de contrôler entièrement le déroulement de la procédure pour obtenir des conditions de sécurité optimale.

L'invention a pour but de supprimer ces inconvénients.

Selon l'invention, le procédé est caractérisé par le fait que, lors du branchement d'un esclave sur le réseau, on initialise la procédure d'attribution d'adresses en activant la régie-maître par la frappe d'un numéro choisi pour l'esclave sur le clavier de programmation qui, d'une part, met ladite régie-maître à l'écoute d'un signal et, d'autre part, déclenche simultanément l'écoulement d'une temporisation à la fin duquel, si aucun signal n'a été enregistré, la régie-maître est désactivée revenant en fonctionnement normal, on actionne un moyen d'activation d'un esclave qui déclenche la fabrication, par un sous-programme, d'un premier message contenant au moins une demande d'attribution d'adresses, on envoie ledit premier message sur le réseau, on attend une réponse de la régie-maître à l'écoute dudit premier message, puis la régie-maître transmet audit esclave un deuxième message comportant notamment le numéro de l'esclave choisi, puis ledit esclave, après réception dudit deuxième message, envoie un accusé-réception visualisable sur le moyen d'affichage et comportant une information sur l'attribution de l'esclave à la régie-maître.

Grâce à ce procédé, on comprendra que, pour adresser un esclave dans le réseau, l'utilisateur effectue une mise en attente de la régie-maître et une action sur le bouton poussoir de l'esclave, déclenchant ainsi automatiquement la transmission du message d'attribution d'adresse vers la régie-maître qui le gérera et qui permettra, grâce à un moyen d'affichage de surveiller l'attribution des esclaves dans le réseau de distribution d'énergie électrique d'une habitation.

Les caractéristiques et avantages de l'invention ressortiront d'ailleurs de la description qui va suivre, à titre d'exemple, en référence aux dessins annexés dans lesquels :
- la Figure 1 est un schéma simplifié illustrant le branchement de récepteurs esclaves et d'une régie-maître sur un réseau auquel est appliqué le procédé d'attribution d'adresses selon l'invention ;
- les Figures 2 et 3 sont des organigrammes destinés à la mise en oeuvre du procédé selon l'invention ;

Afin de permettre une meilleure compréhension de certaines expressions utilisées dans la présente demande, on donne ci-après quelques définitions :
- esclave : émetteur-récepteur, branché sur le réseau ;
- habitation : Etendue spéciale comportant un réseau attribué à un utilisateur par exemple, maison, usine, appartement ;
- famille : groupe d'appareils ayant le même nom, par exemple, les radiateurs, les lampes ;
- zone : partie d'une habitation.

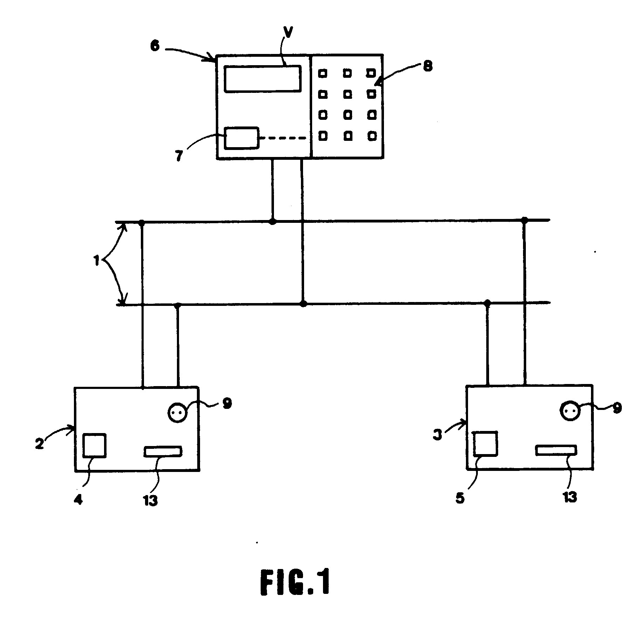

Tel qu'il est schématisé sur la Figure 1, le réseau 1 de distribution d'énergie électrique d'une habitation est équipé d'émetteurs-récepteurs 2, 3... dits esclaves comportant chacun un microcontrôleur 4, 5..., une mémoire EEPROM destinée à contenir différentes adresses relatives notamment à l'esclave, à l'habitation, à la zone, à la famille et à la régie-maître, un moyen de connexion 9 d'un appareil d'utilisation (non représenté) qui lui est associé, par exemple, un appareil électroménager tel qu'une cafetière, un volet à moteur électrique ou une lampe de chevet, et un moyen d'activation 13 de l'esclave. Ce moyen activé 13 est, par exemple, un bouton poussoir qui, lorsqu'il est activé déclenche un sous-programme 14 de fabrication d'un message M1. Sur ce réseau est également branchée une régie-maître 6 comportant un microcontrôleur 7 de gestion des informations, une mémoire RAM sauvegardée (non représentée) qui contient des programmes utilisateurs, un clavier de programmation 8 relié au microcontrôleur permettant d'agir sur le déroulement du programme d'application et un moyen d'affichage V permettant la visualisation, notamment du numéro de l'esclave que l'on attribue par la régie-maître lors du déclenchement de la procédure d'attribution.

Les microcontrôleurs utilisés sont, par exemple, du type 80C51 fabriqués, par exemple, par la Société INTEL.

Pour échanger les informations entre les esclaves 2, 3... et la régie-maître 6, on utilise la technique bien connue des courants porteurs qui consiste à moduler un signal porteur de haute fréquence par les informations à transmettre, à l'émettre sur le réseau 1 de distribution qui, en France, possède une tension de 220 volts et une fréquence de 50 hertz, puis à le démoduler de manière à reformer lesdites informations pour leur traitement.

Selon l'invention, pour permettre une communication sans erreur d'identification entre les esclaves 2,3... et la régie-maître 6, on utilise le procédé d'attribution d'adresses suivant.

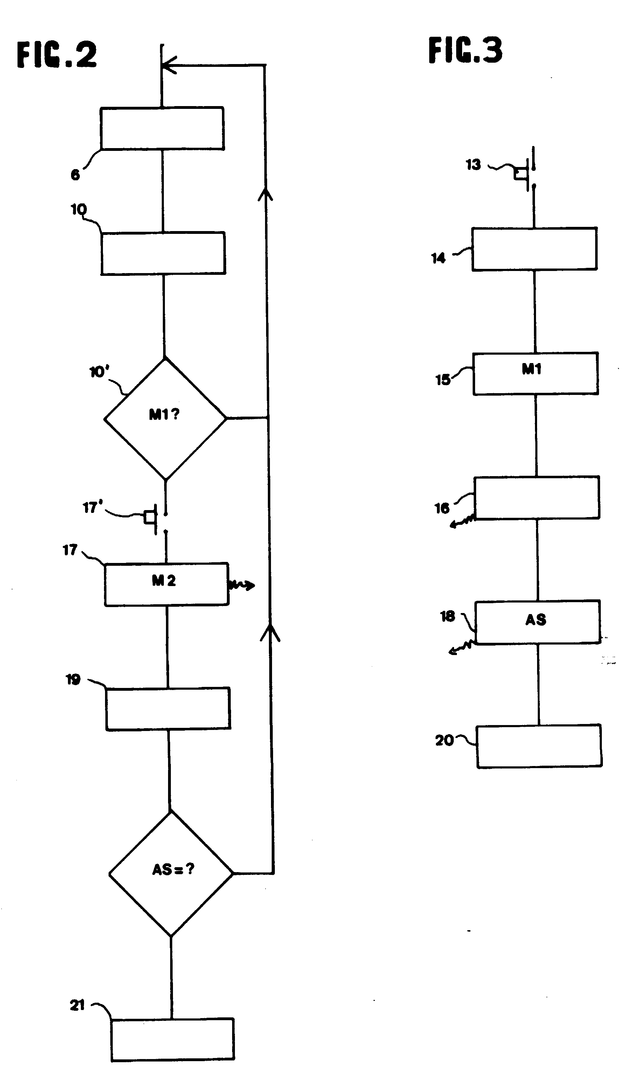

Au niveau des eclaves et de la régie-maître, après un branchement d'un esclave sur le réseau, et comme représenté sur les Figures 2 (organigramme au niveau de la régie-maître) et 3 (organigramme au niveau de l'esclave), on initialise 10 la procédure d'attribution d'adresses en activant la régie-maître 6 qui passe en mode "attente", par exemple, par la frappe d'un numéro sur le clavier 8. Ce numéro est, par exemple, le numéro que l'on veut attribuer à l'esclave qui a été branché sur le réseau. On déclenche 10' simultanément une temporisation à la fin de laquelle, si aucun message M1 n'a été reçu par la régie-maître, cette dernière est désactivée et repositionnée en fonctionnement normal. Le message M1 provient généralement d'un esclave qui demande, par le déclenchement du bouton poussoir 13 fixé sur ledit esclave, une attribution d'adresse.

Le premier message M1 comporte, par exemple, des octets obligatoires au nombre de trois et des octets optionnels de données dont le nombre est compris entre 0 et 13. Les trois octets obligatoires sont définis de la manière suivante :
- le premier octet est constitué d'un bit correspondant au choix de l'accusé réception ou non, de trois bits définissant le mode de diffusion (zone(s), famille(s), général...) et de quatre bits indiquant le nombre d'octets du message M1.
- le deuxième octet est constitué d'un bit indiquant le type du destinataire (régie-maître(s), appareil(s)), de trois bits définissant les codes primaires de commande (marche, arrêt, numéro code, état, heure...) et de quatre bits de description de commande.
- le troisième octet est constitué de huit bits donnant l'adresse appelant.

Les octets optionnels définis suivant le mode de commande contiennent, par exemple, le numéro de maison, le numéro de famille, le numéro de zone, l'adresse appelée, le numéro de la régie-maître.

Le premier message M1, lors de la première demande d'attribution d'adresse ne contient que quelques uns des éléments définis précédemment. Pour déclencher 14, le message M1, on appuie sur le bouton poussoir 13 de l'esclave (2,3..). On envoie 15 ledit premier message M1 sur le réseau, on attend 16 une réponse de la régie-maître en mode "attente" au dit premier message M_{1 ;} cette réponse figurée par 17, est l'émission d'un deuxième message M2 au moyen, par exemple, d'une touche d'activation 17'. Le deuxième message M2 comporte les mêmes éléments que le premier message M1. Lors de la première demande d'attribution d'adresse, ce message M2 transmet, à l'esclave, toutes les informations nécessaires à son adressage sur le réseau. Dès réception du message M2, l'esclave 2, 3.. envoie 18 un accusé avec suite AS en direction de la régie-maître. Cet accusé avec suite AS comporte une information déterminant la bonne attribution ou non, par l'esclave, de sa demande et met fin 20 à la transmission.

Ladite information lorsqu'elle est reçue en 19 est, par exemple, visualisable sur le moyen d'affichage V de la régie-maître. Elle contient, par exemple, soit le message "OK", soit le message "ERROR". Le message "OK" correspond, par exemple, à une bonne transmission des informations contenues dans le deuxième message M2 ; ces dernières, dans ce cas, sont mémorisées dans une mémoire de l'esclave. Le message "ERROR" signifie, par exemple, soit une mauvaise transmission des informations du deuxième message, soit une attribution par une autre régie-maître placée sur le réseau dudit esclave. Lorsque ce message "ERROR" apparait, il est donc obligatoire de recommencer la procédure d'attribution d'adresses pour obtenir la visualisation du message "OK" sur la régie-maître, message correspondant à un parfait déroulement de la procédure d'attribution d'adresses et qui met fin 21 à la demande d'attribution.

Dans un autre exemple de réalisation, pour informer l'utilisateur d'une bonne ou mauvaise procédure d'attribution d'adresses, il est possible d'employer, par exemple, un indicateur sonore qui, par exemple, lors d'une bonne procédure d'attribution, n'émet pas de signal sonore et qui, lors d'une mauvaise procédure d'attribution, déclenche un signale sonore.
Tout indicateur chargé de prévenir l'utilisateur peut être utilisé sous réserve de respecter des conditions d'encombrement dûes aux dimensions de la régie-maître.

Comme on le voit, la régie-maître possède deux types de fonctionnement : un fonctionnement normal et un fonctionnement actif. L'utilisateur déclenche le fonctionnement actif de la régie-maître contrôlant, d'une part, entièrement la procédure d'attribution d'un esclave sur le réseau, et, d'autre part, les procédures de programmation et de vérification du fonctionnement de l'ensemble du système ainsi mis en place. Lorsqu'aucune action n'est exercée par un utilisateur, la régie-maître se positionne dans le fonctionnement normal, c'est-à-dire que l'on a une visualisation sur le moyen d'affichage V de la régie-maître de l'heure donnée par une horloge interne (non représentée).

## Revendications

1. Procédé d'attribution d'adresses dans un réseau (1) de distribution d'énergie électrique d'une habitation et dans lequel on utilise la technique des courants porteurs pour la transmission d'informations entre des émetteurs-récepteurs (2, 3..) dits esclaves comportant chacun un microcontrôleur (4, 5..), et une mémoire EEPROM destinée à contenir différentes adresses relatives notamment à l'esclave et à l'habitation, et au moins une régie-maître (6) comportant un moyen d'affichage (V) et un microcontrôleur (7) de gestion des informations qui est relié à un clavier de programmation (8) et qui contient dans sa mémoire des programmes utilisateurs et différentes adresses relatives notamment aux esclaves et à l'habitation, caractérisé par le fait que, lors du branchement d'un esclave sur le réseau, on initialise la procédure d'attribution d'adresses en activant la régie-maître (6) par la frappe d'un numéro choisi pour l'esclave sur le clavier de programmation (8) qui, d'une part, met ladite régie-maître (6) à l'écoute d'un signal et, d'autre part, déclenche simultanément l'écoulement d'une temporisation à la fin duquel, si aucun signal n'a été enregistré, la régie-maître (6) est désactivée revenant en fonctionnement normal, on actionne un moyen d'activation (13) d'un esclave (2, 3..) qui déclenche la fabrication, par un sous-programme (14) d'un premier message M1 contenant au moins une demande d'attribution d'adresse, on envoie (15) ledit premier message M1 sur le réseau (1), on attend (16) un deuxième message M2 de la régie-maître (6) à l'écoute dudit premiere message M1, puis la régie-maître (6) transmet au dit esclave(2, 3..) le deuxième message M2 comportant notamment le numéro de l'esclave choisi, puis ledit esclave (2, 3..), après réception dudit deuxième message M2, envoie (18) un accusé avec suite (AS) comportant une information sur l'attribution de l'esclave à la régie-maître (6), ladite information étant transmise à l'utilisateur au moyen d'un indicateur.

2. Procédé d'attribution d'adresses selon la revendication 1, **caractérisé en ce que** l'indicateur est le moyen d'affichage (V) de la régie-maître (6).

3. Procédé d'attribution d'adresses selon la revendication 2, **caractérisé en ce que** l'information de l'accusé avec suite (AS) comportent deux messages s'affichant séparément sur le moyen d'affichage (V) suivant l'attribution ou non de l'esclave, un message "OK" correspondant à une bonne attribution de l'esclave ou un message "ERROR" correspondant à une mauvaise attribution de l'esclave au cours de la procédure d'attribution.

4. Procédé d'attribution d'adresses selon la revendication 1 **caractérisé en ce que** le message M1 comporte trois octets principaux dans lesquels le premier octet est constitué d'un bit correspondant au choix de l'accusé avec suite ou non, de trois bits définissant le mode de diffusion (zone(s), famille(s), général...) et de quatre bits indiquant le nombre d'octets du message M1, le deuxième octet est constitué d'un bit indiquant le type du destinataire (régie-maître(s), appareil(s)), de trois bits définissant les codes primaires de commande (marche, arrêt, numéro code, état, heure...) et de quatre bits de description de commande et le troisième octet est constitué de huit bits donnant l'adresse appelant.

5. Procédé d'attribution d'adresses selon la revendication 4 **caractérisé en ce que** le message M1 comporte lesdits trois octets principaux et des octets optionnels.

6. Procédé d'attribution d'adresses selon la revendication 1 **caractérisé en ce que** le message M2 comporte trois octets principaux dans lesquels le premier octet est constitué d'un bit correspondant au choix de l'accusé réception ou non, de trois bits définissant le mode de diffusion (zone(s), famille(s), général...) et de quatre bits indiquant le nombre d'octets du message M2, le deuxième octet est constitué d'un bit indiquant le type du destinataire (régie-maître(s), appareil(s)), de trois bits définissant les codes primaires de commande (marche, arrêt, numéro code, état, heure...) et de quatre bits de description de commande et le troisième octet est constitué de huit bits donnant l'adresse appelant.

7. Procédé d'attribution d'adresses selon la revendication 6 **caractérisé en ce que** le message M2 comporte lesdits trois octets principaux et des octets optionnels.

8. Procédé d'attribution d'adresses selon la revendication 1, **caractérisé en ce que** le moyen d'activation 13 est un bouton poussoir.

## Patentansprüche

1. Verfahren zur Adressenzuordnung in einem elektrischen Energieverteilernetz (1) einer Wohnung, bei dem die Technik der Trägerströme zur Übertragung von Informationen zwischen Sende-Empfängern (2, 3...), sogenannten Slaves, die jeweils einen Mikrosteuerbaustein (4, 5...) und einen EEPROM-Speicher aufweisen, der zur Aufnahme verschiedener Adressen, insbesondere bezüglich des Slave und der Wohnung bestimmt ist, sowie wenigstens eine Mastersteuerung (6) verwendet wird, die ein Anzeigemittel (V) sowie einen Mikrosteuerbaustein (7) zur Verwaltung der Informationen aufweist, der mit einer Programmiertastatur (8) verbunden ist und in seinem Speicher Benutzerprogramme und verschiedene Adressen, insbesondere bezüglich der Slaves und der Wohnung aufweist, **dadurch gekennzeichnet, daß** beim Anschluß eines Slave an das Netz die Adressenzuordnungsprozedur initiiert wird, indem die Mastersteuerung (6) durch Eintippen einer für den Slave gewählten Nummer auf der Programmiertastatur aktiviert wird, die einerseits die Mastersteuerung (6) für ein Signal auf Empfang stellt und andererseits gleichzeitig den Ablauf einer Verzögerungszeit auslöst, an deren Ende dann, wenn kein Signal aufgezeichnet worden ist, die Mastersteuerung (6) deaktiviert wird und zum Normalbetrieb zurückkehrt, ein Aktivierungsmittel (13) für einen Slave (2, 3...) betätigt wird, das über ein Subprogramm (14) die Erstellung einer ersten Nachricht M1 mit wenigstens einer Adressenzuordnungsanforderung auslöst, die erste Nachricht M1 auf das Netz (1) geschickt wird (15), eine zweite Nachricht M2 der Mastersteuerung (6) auf das Abhören der ersten Nachricht M1 abgewartet wird (16), die Mastersteuerung (6) dann die zweite Nachricht M2 zu dem Slave überträgt, die insbesondere die Nummer des gewählten Slave aufweist, der Slave (2, 3...) dann, nach dem Empfang der zweiten Nachricht M2, zu der Mastersteuerung (6) eine Quittung mit Folge (AS) schickt (18), die eine Information über die Zuordnung des Slave enthält, wobei die Information mittels eines Anzeigers zu dem Benutzer übertragen wird.

2. Adressenzuordnungsverfahren nach Anspruch 1, **dadurch gekennzeichnet, daß** der Anzeiger das Anzeigemittel (V) der Mastersteuerung (6) ist.

3. Adressenzuordnungsverfahren nach Anspruch 2, **dadurch gekenn zeichnet, daß** die Information der Quittung mit Folge (AS) zwei Nachrichten enthält, die getrennt an dem Anzeigemittel (V) angezeigt werden, je nachdem, ob ein Slave zugeordnet worden ist oder nicht, nämlich eine Nachricht "OK", die einer guten Zuordnung des Slave entspricht, oder eine Nachricht "ERROR", die einer schlechten Zuordnung des Slave im Verlauf der Zuordnungsprozedur entspricht.

4. Adressenzuordnungsverfahren nach Anspruch 1, **dadurch gekennzeichnet, daß** die Nachricht M1 drei Hauptoktetts aufweist, worin das erste Oktett aus einem Bit, das der Wahl der Quittung mit Folge entspricht oder nicht, aus drei Bits, die den Rundrufmodus definieren (Zone(n), Familie(n), allgemein...), sowie aus vier Bits besteht, die die Oktettzahl der Nachricht M1 angeben, das zweite Oktett aus einem Bit, das den Typ des Empfängers angibt (Mastersteuerung(en), Gerät(e)), aus drei Bits, die die Primärsteuercodes (Betrieb, Halt, Codenummer, Status, Uhrzeit...) definieren, sowie aus vier Befehlsbeschreibungsbits besteht, und das dritte Oktett aus acht Bits besteht, die die rufende Adresse angeben.

5. Adressenzuordnungsverfahren nach Anspruch 4, **dadurch gekennzeichnet, daß** die Nachricht M1 die drei Hauptoktetts und optionale Oktetts aufweist.

6. Adressenzuordnungsverfahren nach Anspruch 1, dadurch gekenn**zeichnet, daß** die Nachricht M2 drei Hauptoktetts aufweist, worin das erste Oktett aus einem Bit, das der Wahl der Empfangsquittung entspricht oder nicht, aus drei Bits, die den Rundrufmodus definieren (Zone(n), Familie(n), allgemein...), sowie aus vier Bits besteht, die die Oktettzahl der Nachricht M1 angeben, das zweite Oktett aus einem Bit, das den Typ des Empfängers angibt (Mastersteuerung(en), Gerät(e)), aus drei Bits, die die Primärsteuercodes (Betrieb, Halt, Codenummer, Status, Uhrzeit...) definieren, sowie aus vier Befehlsbeschreibungsbits besteht, und das dritte Oktett aus acht Bits besteht, die die rufende Adresse angeben.

7. Adressenzuordnungsverfahren nach Anspruch 6, **dadurch gekenn zeichnet, daß** die Nachricht M2 die drei Hauptoktetts und optionale Oktetts aufweist.

8. Adressenzuordnungsverfahren nach Anspruch 1, **dadurch gekenn zeichnet, daß** das Aktivierungsmittel (13) eine Drucktaste ist.

## Claims

1. Method of allocating addresses in an electrical energy distribution network (1) in a dwelling and in which the technique of carrier currents is used for the transmission of information between so-called slave transceivers (2, 3..) each having a microcontroller (4, 5..), and an EEPROM memory intended to contain different addresses relating notably to the slave and to the dwelling, and at least one master controller (6) having a display means (V) and an information-management microcontroller (7) which is connected to a programming keypad (8) and which contains in its memory user programs and different addresses relating notably to the slaves and to the dwelling, characterised by the fact that, when a slave is connected to the network, the address allocation procedure is initiated by activating the master controller (6) through keying in a number chosen for the slave on the programming keypad (8) which, on the one hand, causes the said master controller (6) to listen out for a signal and, on the other hand, simultaneously triggers a time delay at the end of which, if no signal has been registered, the master controller (6) is deactivated, returning to normal operation, a means (13) of activating a slave (2, 3..) is actuated which triggers the production, by a sub-program (14), of a first message M1 containing at least one address allocation request, the said first message M1 is sent (15) over the network (1), a second message M2 from the master controller (6) listening out for the said first message M1 is awaited (16), then the master controller (6) transmits to the said slave (2, 3..) the second message M2 including notably the number of the chosen slave, then the said slave (2, 3..), after reception of the said second message M2, sends (18) an acknowledgement with continuation (AS) including an item of information on the allocation of the slave to the master controller (6), the said item of information being transmitted to the user by means of an indicator.

2. Address allocation method according to Claim 1,
characterised in that the indicator is the display means (V) of the master controller (6).

3. Address allocation method according to Claim 2,
characterised in that the information of the acknowledgement with continuation (AS) include two messages displayed separately on the display means (V) according to the allocation or otherwise of the slave, an "OK" message corresponding to a correct allocation of the slave or an "ERROR" message corresponding to an incorrect allocation of the slave during the allocation procedure.

4. Address allocation method according to Claim 1,
characterised in that the message M1 includes three main octets in which the first octet consists of a bit corresponding to the choice of the acknowledgement with continuation or not, three bits defining the broadcast mode (zone(s), class(es), general...) and four bits indicating the number of octets of the message M1, the second octet consists of a bit indicating the type of addressee (master controller(s), appliance(s)), three bits defining the primary control codes (start, stop, code number, state, time...) and four command description bits, and the third octet consists of eight bits giving the caller address.

5. Address allocation method according to Claim 4,
characterised in that the message M1 includes the said three main octets and optional octets.

6. Address allocation method according to Claim 1,
characterised in that the message M2 includes three main octets in which the first octet consists of a bit corresponding to the choice of the acknowledgement of reception or not, three bits defining the broadcast mode (zone(s), class(es), general...) and four bits indicating the number of octets of the message M2, the second octet consists of a bit indicating the type of addressee (master controller(s), appliance(s)), three bits defining the primary control codes (start, stop, code number, state, time...) and four command description bits, and the third octet consists of eight bits giving the caller address.

7. Address allocation method according to Claim 6,
characterised in that the message M2 includes the said three main octets and optional octets.

8. Address allocation method according to Claim 1,
characterised in that the activation means 13 is a pushbutton.
